(19) Europäisches Patentamt / European Patent Office / Office européen des brevets

(11) **EP 4 286 715 A2**

(12) **EUROPEAN PATENT APPLICATION**


(43) Date of publication:
**06.12.2023 Bulletin 2023/49**

(21) Application number: **23162861.1**

(22) Date of filing: **20.03.2023**

(51) International Patent Classification (IPC):
***F16J 15/16*** *(2006.01)* ***B25J 9/10*** *(2006.01)*
***F16H 1/32*** *(2006.01)* ***F16J 15/3204*** *(2016.01)*
***F16J 15/447*** *(2006.01)* ***B25J 19/00*** *(2006.01)*
***F16H 57/029*** *(2012.01)* ***F16H 57/031*** *(2012.01)*
***F16J 15/00*** *(2006.01)*

(52) Cooperative Patent Classification (CPC):
**F16J 15/164; B25J 9/102; B25J 19/0075; F16H 1/32; F16H 57/029; F16H 57/031; F16J 15/002; F16J 15/3204; F16J 15/4472;**
F16H 2001/323

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.05.2022 JP 2022078913**



(71) Applicant: **Nabtesco Corporation**
**Tokyo 102-0093 (JP)**

(72) Inventors:
- **Nakai, Yuto**
  **Tokyo (JP)**
- **Sugiyama, Atsushi**
  **Tokyo (JP)**

(74) Representative: **Grünecker Patent- und Rechtsanwälte**
**PartG mbB**
**Leopoldstraße 4**
**80802 München (DE)**


(54) **SEALING DEVICE, ROTATING DEVICE, AND INDUSTRIAL ROBOT**


(57) An aspect of the present invention provides a sealing device (10) including a cylindrical cover (5) having an opening (5d); an output plate (9) fitted onto an inner peripheral surface (5b) of the cover (5); a primary sealing portion (28) providing sealing between the cover (5) and the output plate (9); and a secondary sealing portion (29) closer to the opening (5d) than is the primary sealing portion (28). The secondary sealing portion (29) is defined at least by the cover (5) and the output plate (9).

10
29
28
5
3
26a
5c
G1
W2
W1
G2
5b
5d
Hm1
9
φD
31
26
33
Wm


Fig. 3

EP 4 286 715 A2

## Description

### TECHNICAL FIELD

The present invention relates to a sealing device, a rotating device and an industrial robot.

### BACKGROUND

Machine tools and other industrial robots use various types of rotating devices for the driving purpose. For example, machine tools such as machining centers use, for example, reducer-equipped motors (motor driving devices) to drive tool changers. A reducer-equipped motor is constituted by a cylindrical casing, an electric motor housed in the casing, and a speed reducer or a rotating device for receiving rotation generated by and fed from the electric motor. The output part of the speed reducer is fixedly attached to a mating member (e.g., a tool changer). In this case, the reducer-equipped motor reduces the rotation generated by the electric motor and outputs the reduced rotation to the mating member that is to be driven.

Since the speed reducer is configured to transmit the rotational force to the mating member, the speed reducer is not allowed to be completely sealed by the casing. To overcome this drawback, a sealing is provided between the casing and the output part of the speed reducer to establish sealing between the casing and the output part of the speed reducer. The sealing is designed to prevent water and dust from entering the motor driving device through the space between the casing and the output part.

### RELEVANT REFERENCES

### LIST OF RELEVANT PATENT LITERATURE

Patent Literature 1: Japanese Patent Application Publication No. 2011 - 240772

### SUMMARY

According to the above-described conventional art, however, some operating environments do not allow the sealing to be satisfactorily play its role and fluids such as water and dust can not be reliably prevented from entering inside the speed reducer. For example, due to strict hygiene requirements, the reducer-equipped motor may need high-pressure washing. In this case, there is a possibility that water or other fluids could enter inside the speed reducer. This problem may be simply solved by increasing the sealing, but this solution may mean an increased number of parts and thus require more troublesome parts management.

The present invention provides a sealing device, a rotating device, and an industrial robot that are capable of achieving satisfactory sealing in various operating environments and allow for easy parts management.

An aspect of the present invention provides a sealing device including a cylindrical first member having an opening, a second member fitted onto an inner peripheral surface of the first member, a primary sealing portion providing sealing between the first and second members, and a secondary sealing portion closer to the opening than is the primary sealing portion. The secondary sealing portion is defined at least by the first and second members.

With the above-described arrangement, the secondary sealing portion can attenuate the momentum of fluids and dust flowing toward the primary sealing portion. As a result, the primary sealing portion can achieve satisfactory sealing in various environments. The secondary sealing portion is defined at least by the first and second members. Thus, separate parts are not required to provide for the secondary sealing portion. This makes it easy to manage the parts of the sealing device.

In the above-described implementation, the secondary sealing portion may include a lid provided on the second member at a side close to the opening. The lid may face in an axial direction an axial end of the first member such that the lid covers the opening. A width between the inner peripheral surface of the first member and an outer peripheral surface of the second member may be greater than a width between the lid and the axial end of the first member.

In the above-described implementation, in the secondary sealing portion, a recess may be formed in at least one of the inner peripheral surface of the first member or an outer peripheral surface of the second member.

In the above-described implementation, in the secondary sealing portion, a protrusion may be formed on at least one of the inner peripheral surface of the first member or an outer peripheral surface of the second member.

In the above-described implementation, in the secondary sealing portion, two side surfaces may face each other in a radial direction with a gap therebetween. The two side surfaces may be adjacent to the primary sealing portion and, when seen in an axial direction, positioned not to overlap radially outer and inner ends of the primary sealing portion.

In the above-described implementation, when Wg1 represents a width between the two side surfaces, and Wg2 represents a width between the inner peripheral surface of the first member and an outer peripheral surface of the second member at a site where the primary sealing portion is provided, the widths Wg1 and Wg2 may satisfy a relation represented as $1/3 \times Wg2 \leq Wg1 \leq 1/2 \times Wg2$.

In the above-described implementation, when Wg1 represents a width between the inner peripheral surface of the first member and (ii) an outer peripheral surface of the second member in the secondary sealing portion, and Wg2 represents a width between the inner peripheral surface of the first member and the outer peripheral surface of the second member at a site where the primary sealing portion is provided, the widths Wg1 and Wg2 may satisfy a relation represented as $1/3 \times Wg2 \leq Wg1 \leq 1/2 \times Wg2$.

In the above-described implementation, the first member may be made of stainless steel.

Another aspect of the present invention provides a sealing device including a cylindrical first member having an opening, the first member being made of stainless steel, a second member fitted onto an inner peripheral surface of the first member, a primary sealing portion providing sealing between the first and second members, and a secondary sealing portion closer to the opening than is the primary sealing portion. The secondary sealing portion is defined at least by the first and second members, and, in the secondary sealing portion, a lid is provided on the second member at a side close to the opening, the lid faces in an axial direction an axial end of the first member such that the lid covers the opening, and a width between the lid and the axial end of the first member is less than a width between the inner peripheral surface of the first member and an outer peripheral surface of the second member.

For example, if a high-pressure fluid (high-pressure water) is poured onto the gap between the first and second members, the high-pressure fluid penetrates between the lid and the axial end of the first member and then penetrates between the inner peripheral surface of the first member and the outer peripheral surface of the second member. Since the width between the inner peripheral surface of the first member and the outer peripheral surface of the second member is greater than the width between the lid and the axial end of the first member, the fluid can avoid experiencing a rise in the pressure after penetrating between the inner peripheral surface of the first member and the outer peripheral surface of the second member. In other words, the secondary sealing portion can attenuate the momentum of the fluid flowing toward the primary sealing portion. As a result, the primary sealing portion can achieve satisfactory sealing.

Another aspect of the present invention provides a sealing device including a cylindrical first member having an opening, the first member being made of stainless steel, a second member fitted onto an inner peripheral surface of the first member, a primary sealing portion providing sealing between the first and second members, and a secondary sealing portion closer to the opening than is the primary sealing portion. The secondary sealing portion is defined at least by the first and second members, and, in the secondary sealing portion, side surfaces face each other in a radial direction with a gap therebetween, and the side surfaces are adjacent to the primary sealing portion and, when seen in an axial direction, positioned not to overlap radially outer and inner ends of the primary sealing portion.

The primary sealing portion is in contact with the inner peripheral surface of the first member and the outer peripheral surface of the second member at the radially outer and inner ends. If fluids or the like are directly poured between the inner peripheral surface of the first member and the primary sealing portion and between the outer peripheral surface of the second member and the primary sealing portion, the primary sealing portion may easily allow the fluids or the like to penetrate. The gap between the side surfaces that are adjacent to the primary sealing portion and face each other in the radial direction forms a passageway for the fluids or the like. As the passageway is positioned so as not to overlap, when seen in the axial direction, the radially outer and inner ends of the primary sealing portions, the fluids or the like can be prevented from being directly poured between the inner peripheral surface of the first member and the primary sealing portion and between the outer peripheral surface of the second member and the primary sealing portion. As a result, the primary sealing portion can achieve even more satisfactory sealing.

Another aspect of the present invention provides a rotating device including a cylindrical cover having an opening, a speed reducer fitted onto an inner peripheral surface of the cover, an output plate attached to the speed reducer, the output plate being fitted onto the inner peripheral surface of the cover, and a sealing device providing sealing between the cover and the output plate. The speed reducer includes an internal gear fitted onto the inner peripheral surface of the cover, the internal gear having internal teeth, an oscillating gear having external teeth meshing with the internal teeth, the oscillating gear being configured to oscillatorily rotate, a crankshaft configured to receive a rotational force generated by and input from a power generating unit, and a carrier to which the output plate is attached. The crankshaft has an eccentric portion rotatably supporting the oscillating gear, and the crankshaft is configured to transmit the rotational force generated by the power generating unit to the oscillating gear. A rotational force generated by the oscillating gear is transmitted to the carrier, and the carrier is configured to output the rotational force generated by the oscillating gear to the output plate. The sealing device includes a primary sealing portion providing sealing between the cover and the output plate, and a secondary sealing portion closer to the opening than is the primary sealing portion, the secondary sealing portion being defined at least by the cover and the output plate.

With the arrangement described above, the rotating device is capable of achieving satisfactory sealing in various operating environments and allow for easy parts management.

Another aspect of the present invention provides an industrial robot including a cylindrical cover having an opening, a speed reducer fitted onto an inner peripheral surface of the cover, an output plate attached to the speed reducer, the output plate being fitted onto the inner peripheral surface of the cover, and a mating member attached to the output plate so as to face away from the speed reducer in an axial direction, a sealing device providing sealing between the cover and the output plate, a power generating unit for generating a rotational force. The speed reducer includes an internal gear fitted onto the inner peripheral surface of the cover, the internal gear having internal teeth, an oscillating gear having external teeth meshing with the internal teeth, the oscillating gear being configured to oscillatorily rotate, a crankshaft configured to receive the rotational force generated by and input from the power generating unit, and a carrier to which the output plate is attached. The crankshaft has an eccentric portion rotatably supporting the oscillating gear, and the crankshaft is configured to transmit the rotational force generated by the power generating unit to the oscillating gear. A rotational force generated by the oscillating gear is transmitted to the carrier, and the carrier is configured to output the rotational force generated by the oscillating gear to the output plate. The sealing device includes a primary sealing portion providing sealing between the cover and the output plate, and a secondary sealing portion closer to the opening than is the primary sealing portion. The secondary sealing portion is defined at least by the cover and the output plate.

With the arrangement described above, the industrial robot is capable of achieving satisfactory sealing in various operating environments and allow for easy parts management.

## ADVANTAGEOUS EFFECTS

The above-described sealing device, rotating device, and industrial robot are capable of achieving satisfactory sealing in various operating environments and allow for easy parts management.

## BRIEF DESCRIPTION OF THE DRAWINGS

Fig. 1 is a partial sectional view of an industrial robot according to a first embodiment of the present invention.

Fig. 2 shows the configuration of a speed reducer relating to the first embodiment of the present invention.

Fig. 3 is an enlarged view of a part III of Fig. 1.

Fig. 4 illustrates how a sealing device relating to the first embodiment of the present invention works.

FIG. 5 is a schematic diagram showing a sealing device relating to a modification example of the first embodiment of the present invention.

Fig. 6 schematically illustrates the configuration of a sealing device relating to a second embodiment of the present invention.

## DESCRIPTION OF THE PREFERRED EMBODIMENTS

The embodiments of the present invention will be hereinafter described with reference to the drawings.

<First Embodiment>

<Industrial Robot>

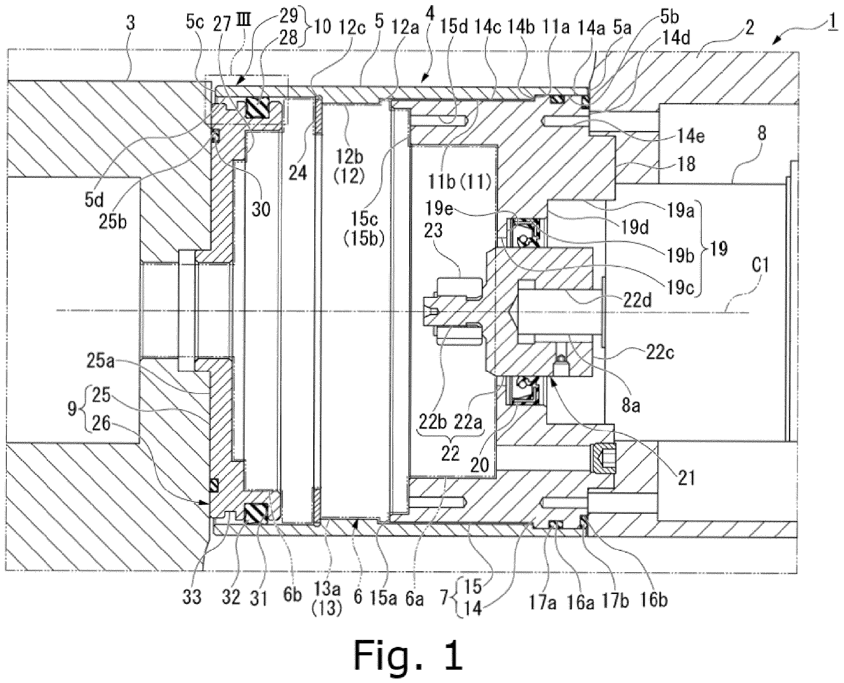

Fig. 1 is a partial sectional view of an industrial robot 1. The industrial robot 1 is, for example, a machine tool such as a machining center. As shown in Fig. 1, the industrial robot 1 includes two mating members 2 and 3 (a first mating member 2 and a second mating member 3 (an example of a mating member set forth in the claims) and a motor 4 equipped with a speed reducer (herein referred to as "the reducer-equipped motor 4" and introduced as an example of a rotating device set forth in the claims) via which the two mating members 2 and 3 are rotatably coupled.

For example, the first mating member 2 is a post on a machine tool. For example, the second mating member 3 is a tool changer. The reducer-equipped motor 4 is configured to rotate the second mating member 3 around an axis of rotation C1 relative to the first mating member 2.

<Reducer-Equipped Motor>

The reducer-equipped motor 4 is mainly constituted by a cylindrical cover 5 (an example of a first member set forth in the claims), a speed reducer 6 fitted in the cover 5, a motor flange 7 fitted in the cover 5, an electric motor 8 fixedly attached to the motor flange 7 on the opposite side to the side where the speed reducer 6 is provided, an output plate 9 (an example of a second member set forth in the claims) provided on the speed reducer 6 on the opposite side to the side where the motor flange 7 is provided, and a sealing device 10 providing sealing between the cover 5 and the output plate 9. The motor flange 7 secures the speed reducer 6 to the first mating member 2. The output plate 9 is fitted in the cover 5. In the following description, the term "axial direction" refers to the direction parallel to the axis of rotation C1. The term "circumferential direction" refers to the direction extending around the axis of rotation C1. The term "radial direction" refers to the radial direction of the reducer-equipped motor 4, which is orthogonal to the axial and circumferential directions.

The cover 5 is made of, for example, stainless steel. A first end 5a of the cover 5 facing the first mating member 2 butts up against the first mating member 2. On an inner peripheral surface 5b of the cover 5, a flange fitting ridge 11 is formed by a step 11a. The flange-fitting ridge 11 extends from the center in the axial direction and ends before the first end 5a. The inner diameter of the flange fitting ridge 11 is less than the inner diameter of the inner peripheral surface 5b of the cover 5. The flange fitting ridge 11 extends along the entire circumference. The motor flange 7 is fitted onto the inner peripheral surface 11b of the flange fitting ridge 11.

On the inner peripheral surface 5b of the cover 5, a reducer fitting ridge 12 is formed by a step 12a. The reducer fitting ridge 12 is positioned between the flange fitting ridge 11 and the second mating member 3. The inner diameter of the reducer fitting ridge 12 is less than the inner diameter of the flange fitting ridge 11. The reducer fitting ridge 12 extends along the entire circumference. The speed reducer 6 is fitted onto the inner peripheral surface 12b of the reducer fitting ridge 12.

The motor flange 7 includes a flange body 14 shaped like a circular disk and a cylindrical portion 15 protruding from the flange body 14 toward the speed reducer 6, where the flange body 14 and the cylindrical portion 15 are integrally formed. On an outer peripheral surface 14a of the flange body 14, a reduced-diameter portion 14c is formed by a step 14b. The reduced-diameter portion 14c is positioned on the cylindrical portion 15 side with respect to the center in the axial direction. The outer diameter of the reduced-diameter portion 14c is less than the outer diameter of the outer peripheral surface 14a of the flange body 14. The outer peripheral surface of the reduced-diameter portion 14c is flush with the outer peripheral surface of the cylindrical portion 15. The outer peripheral surface of the reduced-diameter portion 14c and the outer peripheral surface of the cylindrical portion 15 are fitted onto the inner peripheral surface 11b of the flange fitting ridge 11.

Since the step 14b butts up against the step 11a of the flange fitting ridge 11, the motor flange 7 can be rightly positioned in the axial direction with respect to the cover 5. With the motor flange 7 being rightly positioned with respect to the cover 5, the end 15a of the cylindrical portion 15 faces the step 12a of the reducer fitting ridge 12 with a gap therebetween. A recess 15b is formed in the end 15a of the cylindrical portion 15. The recess 15b occupies a large part of the inner peripheral portion of the end 15a. The recess 15b receives therein the speed reducer 6. A plurality of first internally threaded portions 15d are formed in a bottom 15c of the recess 15b and arranged at equal intervals in the circumferential direction. The speed reducer 6 can be secured onto the cylindrical portion 15 by bolts (not shown) being tightened into the first internally threaded portions 15d.

A first end surface 14d of the flange body 14 facing the first mating member 2 is flush with the first end 5a of the cover 5. In other words, the first end surface 14d of the flange body 14 butts up against the first mating member 2. A plurality of second internally threaded portions 14e are formed in the first end surface 14d of the flange body 14. The second internally threaded portions 14e are coaxial with the first internally threaded portions 15d. The first mating member 2 can be secured onto the flange body 14 by bolts (not shown) being tightened into the second internally threaded portions 14e.

Two O-ring grooves 16a and 16b (a first O-ring groove 16a and a second O-ring groove 16b) are formed on the outer peripheral surface of the flange body 14 between the reduced diameter portion 14c and the first mating member 2. Of the two O-ring grooves 16a and 16b, the second O-ring groove 16b, which is closer to the first end surface 14d, is open on the first end surface 14d. O-rings 17a and 17b (a first O-ring 17a and a second O-ring 17b) are mounted in the O-ring grooves 16a and 16b, respectively.

Of the two O-rings 17a and 17b, the first O-ring 17a, which is mounted in the first O-ring groove 16a, provides sealing between the flange body 14 and the cover 5. Of the two O-rings 17a and 17b, the second O-ring 17b, which is mounted in the second O-ring groove 16b, provides sealing between the flange body 14 and the cover 5 and also between the flange body 14 and the first mating member 2.

On the first end surface 14d of the flange body 14, a disk-shaped motor seat 18 is integrally formed so as to protrude toward the first mating member 2. The motor seat 18 occupies a large part of the radially central portion of the first end surface 14d. The electric motor 8 is attached onto the motor seat 18. The electric motor 8 is disposed such that its rotatable shaft 8a faces the speed reducer 6. In the radial center of the motor seat 18, a stepped through hole 19 is formed, into which the rotatable shaft 8a can be inserted.

The stepped through hole 19 extends through the motor flange 7 in the axial direction. The stepped through hole 19 includes a first through hole 19a, a second through hole 19b, and a third through hole 19c, which are arranged in the stated order from the first mating member 2 side toward the speed reducer 6 side. The through holes 19a, 19b and 19c are in communication with each other in the axial direction. The second through hole 19b has, via a step 19d, a smaller inner diameter than the first through hole 19a. The third through hole 19c has, via a step 19e, a smaller inner diameter than the second through hole 19b.

An oil seal 20 is provided in the second through hole 19b. The oil seal 20 provides sealing between the stepped through hole 19 and an input gear 21 attached to the rotatable shaft 8a of the electric motor 8. The inner diameter of the third through hole 19c is large enough to receive the input gear 21 attached to the rotatable shaft 8a of the electric motor 8.

The input gear 21 has an attachment 22 mounted to the rotatable shaft 8a and a pinion gear 23 attached to the attachment 22. The attachment 22 has a base 22a and a shaft 22b, which are integrally formed. The base 22a is shaped like a cylindrical column and mounted to the rotatable shaft 8a, and the shaft 22b protrudes from the radial center of the base 22a toward the speed reducer 6. An end surface 22c of the base 22a facing the electric motor 8 has a coupling recess 22d formed in the radial center. The attachment 22 is mounted to the rotatable shaft 8a by fitting the rotatable shaft 8a into the coupling recess 22d. The oil seal 20 provides sealing between the outer peripheral surface of the base 22a and the second through hole 19b of the stepped through hole 19 formed in the motor flange 7.

The shaft 22b is disposed radially inside the cylindrical portion 15 of the motor flange 7. The pinion gear 23 is mounted to the shaft 22b. The pinion gear 23 meshes with transmission gears 48 of the speed reducer 6, which will be described below.

<Speed Reducer>

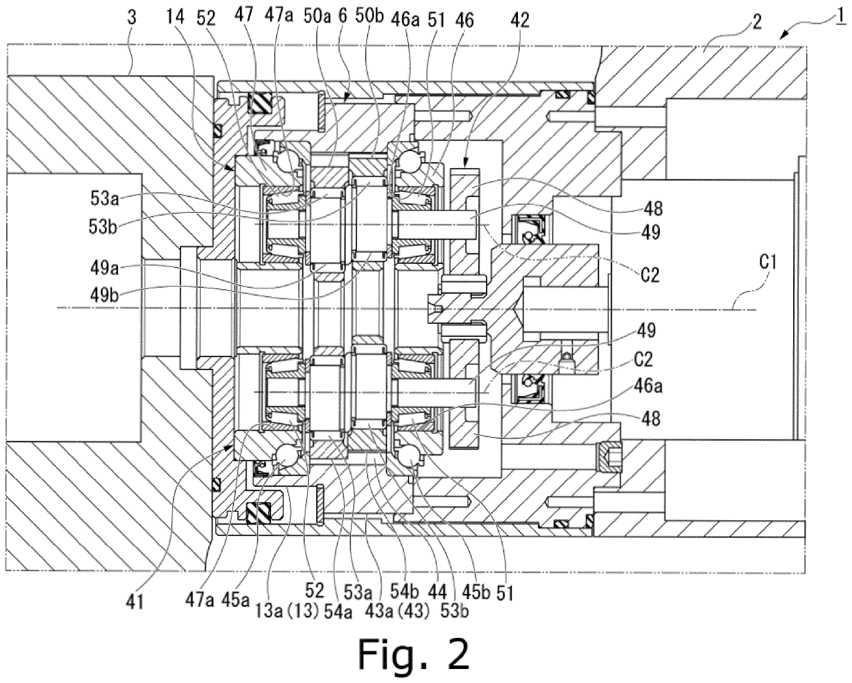

Fig. 2 shows the configuration of the speed reducer 6 and corresponds to Fig. 1 described above. As shown in Fig. 2, the speed reducer 6 includes a cylindrical internal gear 13 fitted onto the inner peripheral surface 12b of the reducer fitting ridge 12, a carrier 41 (an example of an output part set forth in the claims) disposed radially inside the internal gear 13, and a rotation input part 42 connecting together the rotatable shaft 8a (the pinion gear 23) and the carrier 41.

The internal gear 13 also serves as an outer casing of the speed reducer 6. An outer flange 43 projecting outward in the radial direction is integrally formed with an outer peripheral surface 13a of the internal gear 13. An outer peripheral surface 43a of the outer flange 43 is fitted onto the inner peripheral surface 12b of the reducer fitting ridge 12. The end surface of the outer flange 43 in the axial direction butts up against the bottom 15c of the recess 15b. Bolts, not shown, are inserted into the outer flange 43 through plain washers 24 arranged on the step 12c that is between the inner peripheral surface 5b of the cover 5 and the reducer fitting ridge 12. The bolts are tightened into the first internally threaded portions 15d in the motor flange 7. This rightly positions the speed reducer 6 with respect to the cover 5 and also secures the speed reducer 6 to the motor flange 7.

Internal teeth 44 are provided on the inner peripheral surface of the internal gear 13. The internal teeth 44 are pin-shaped (cylindrical) teeth provided on the inner circumferential surface of the internal gear 13. The internal teeth 44 are arranged at equal intervals in the circumferential direction. The carrier 41 is rotatably supported by the internal gear 13 via main bearings 45a and 45b disposed at a distance from each other in the axial direction. The main bearings 45a and 45b are, for example, angular contact ball bearings. The carrier 41 is aligned with the axis of rotation C1.

The carrier 41 includes an end plate 46 and a base plate 47. The end plate 46 is shaped like a circular disk and arranged closer to the electric motor 8 in the axial direction, and the base plate 47 is shaped like a circular plate and positioned closer to the output plate 9. The end and base plates 46 and 47 are at a certain distance from each other in the axial direction and integrated with each other with a column, not shown, therebetween. The end and base plates 46 and 47 respectively have a plurality of (for example, three in the present embodiment) through holes 46a and a plurality of through holes 47a through which crankshafts 49 (an example of an input part set forth in the claims) of the rotation input part 42, described below. The through holes 46a and 47a are arranged at equal intervals in the circumferential direction.

The rotation input part 42 rotates the carrier 41 at a rotation speed obtained by reducing the rotation speed of the rotatable shaft 8a (the pinion gear 23) with a certain ratio. The rotation input part 42 includes a plurality of (for example, three in the present embodiment) transmission gears 48 (an example of an input part set forth in the claims) with which the pinion gear 23 meshes, a plurality of (for example, three in the present embodiment) crankshafts 49 having one end fixedly attached to the transmission gears 48, a first oscillating gear 50a (an example of an oscillating gear set forth in the claims) and a second oscillating gear 50b (an example of the oscillating gear set forth in the claims) that are configured to oscillatory rotate in response to the rotation of the crankshafts 49.

The crankshafts 49 extend along the axial direction. This means that each of the crankshafts 49 rotates about an axis of crank rotation C2 parallel to the axis of rotation C1. Each crankshaft 49 is rotatably supported by the end plate 46 via a first crankshaft bearing 51. Each crankshaft 49 is rotatably supported by the base plate 47 via a second crankshaft bearing 52. The first and second crankshaft bearings 51 and 52 are, for example, tapered roller bearings.

At the center of each crankshaft 49 in the axial direction, there are provided a first eccentric portion 49a and a second eccentric portion 49b the axis of which is away from the axis of the crankshaft 49. The first and second eccentric portions 49a and 49b are adjacent to each other in the axial direction between the first crankshaft bearing 51 and the second crankshaft bearing 52. The first and second eccentric portions 49a and 49b are out of phase. The first and second eccentric portions 49a and 49b rotatably support the first and second oscillating gears 50a and 50b via roller bearings 53a and 53b.

The first and second oscillating gears 50a and 50b are arranged in the carrier 41 between the base plate 46 and the end plate 47. The first and second oscillating gears 50a and 50b have a through hole (not show) to receive the column of the carrier 41. The first and second oscillating gears 50a and 50b respectively have external teeth 54a and 54b that mesh with the internal teeth 44 of the internal gear 13.

As the crankshafts 49 rotate, the first and second eccentric portions 49a and 49b oscillatory rotate, as a result of which the first and second oscillating gears 50a and 50b oscillatorily rotate while meshing with the internal teeth 44 of the internal gear 13. Since the column of the carrier 41 is inserted through the oscillating gears 50a and 50b, the oscillatory rotation of the oscillating gears 50a and 50b cause the carrier 41 to rotate relative to the internal gear 13.

The output plate 9 has an annular plate body 25 and a cylindrical portion 26 integrally formed around the outer periphery of the plate body 25. The cylindrical portion 26 protrudes from the plate body 25 toward the motor flange 7. The plate body 25 and the cylindrical portion 26 form an output part receiving recess 27. The recess 27 is fitted onto the base plate 47 of the carrier 41. The outer peripheral surface 26a of the cylindrical portion 26 is fitted onto the inner peripheral surface 5b of the cover 5.

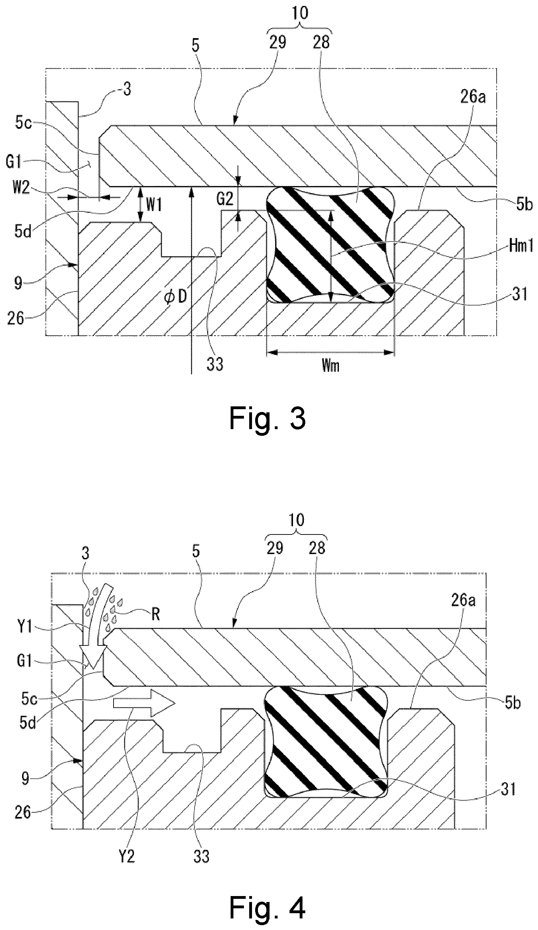

The second mating member 3 is overlaid on a surface 25a of the plate body 25 that faces away from the speed reducer 6. The second mating member 3 faces in the axial direction a second end 5c (an example of an axial end set forth in the claims) of the cover 5 that is opposite to the first end 5a. The second mating member 3 blocks an opening 5d of the cover 5 at the second end 5c with a minute gap G1 therebetween(see Fig. 3). An annular O-ring groove 25b is formed on the surface 25a of the plate body 25. The O-ring groove 25b is positioned radially inside the cylindrical portion 26. An O-ring 30 is placed in the O-ring groove 25b. The O-ring 30 provides sealing between the plate body 25 and the second mating member 3.

The plate body 25 of the output plate 9 and the second mating member 3 are secured onto the carrier 41 (base plate 47) of the speed reducer 6 through bolts (not shown), which are inserted from the second mating member 3 side. In this way, the plate body 25 of the output plate 9, the second mating member 3, and the carrier 41 of the speed reducer 6 can rotate as a single unit.

<Sealing Device>

Fig. 3 is an enlarged view of the part III of Fig. 1. As shown in Figs. 1 and 3, the sealing device 10 is constituted by the cylindrical portion 26 of the output plate 9 and the area surrounding the second end 5c of the cover 5. More specifically, the sealing device 10 has a primary sealing portion 28 and a secondary sealing portion 29. The primary sealing portion 28 is provided on the cylindrical portion 26 so as to be close to the motor flange 7. The secondary sealing portion 29 is closer to the opening 5d of the cover 5 than is the primary sealing portion 28. The primary sealing portion 28 provides sealing between the cover 5 and the cylindrical portion 26.

The primary sealing portion 28 is placed in a sealing groove 31, which extends along the entire circumference of the outer peripheral surface 26a of the cylindrical portion 26. For example, the primary sealing portion 28 can be a so-called X-ring. The present embodiment, however, is not limited to such, and O-rings, oil seals and other sealing members can be used as long as they can provide sealing between the cover 5 and the cylindrical portion 26.

The size of the primary sealing portion 28, the depth Hm1 and width Wm of the sealing groove 31, and the minute gap G2 between the inner peripheral surface 5b of the cover 5 and the outer peripheral surface 26a of the cylindrical portion 26 are determined based on the inner diameter ΦD of the cover 5. For example, the size of the primary sealing portion 28, the depth Hm1 and width Wm of the sealing groove 31, and the minute gap G2 between the inner peripheral surface 5b of the cover 5 and the outer peripheral surface 26a of the cylindrical portion 26 are determined by so-called catalog values.

The secondary sealing portion 29 is defined by the cover 5 and the cylindrical portion 26. The second mating member 3 secured onto the output plate 9 has a portion that covers the opening 5d of the cover 5 and faces in the axial direction the second end 5c of the cover 5, and this portion of the second mating member 3 serves as the secondary sealing portion 29. The second mating member 3 is an example of a lid set forth in the claims. In other words, the width W1 between the inner peripheral surface 5b of the cover 5 and the outer peripheral surface 26a of the cylindrical portion 26 is greater than the width W2 between the second mating member 3 and the second end 5c of the cover 5. This relation between the dimensions provides for the secondary sealing portion 29. The width W2 between the second mating member 3 and the second end 5c of the cover 5 is less than the minute gap G2 between the inner peripheral surface 5b of the cover 5 and the outer peripheral surface 26a of the cylindrical portion 26. In the secondary sealing portion 29, a recess 33 is formed in the outer peripheral surface 26a of the cylindrical portion 26 along the entire circumference.

<How Industrial Robot and Sealing Device Work>

The following now describes how the industrial robot 1 and the sealing device 10 work with reference to Figs. 1 to 4. Fig. 4 shows how the sealing device 10 works and corresponds to Fig. 3 described above. As shown in Figs. 1 to 4, when the electric motor 8 is driven, the rotation of the rotatable shaft 8a is transmitted to the transmission gears 48, so that the transmission gears 48 are rotated. Thus, the crankshafts 49 and the transmission gears 48 integrally rotate on the axis of crank rotation C2.

When the crankshafts 49 rotate, the resultant oscillation of the first eccentric portion 49a causes the first oscillating gear 50a to rotate while meshing with the internal teeth 44. The resultant oscillation of the second eccentric portion 49b causes the second oscillating gear 50b to rotate while meshing with the internal teeth 44. That is, the crankshafts 49 rotate on the axis of crank rotation C2 and also move around the axis of rotation C1. As a result, the carrier 41 rotates about the axis of rotation C1 at a reduced speed when compared with the speed of the rotation of the crankshafts 49. That is, the carrier 41 rotates relative to the internal gear 13 about the axis of rotation C1 at the reduced speed. The plate body 25 of the output plate 9 and the second mating member 3 are integrated with the base plate 47 of the carrier 41. Thus, the output plate 9 and the second mating member 3 rotate integrally with the carrier 41.

The motor flange 7, to which the speed reducer 6 is secured, is also secured onto the first mating member 2. In this manner, the reducer-equipped motor 4 causes the second mating member 3 to rotate about the axis of rotation C1 relative to the first mating member 2. The sealing device 10 is constituted by the cylindrical portion 26 of the output plate 9 and the area surrounding the second end 5c of the cover 5. This ensures the sealing between the cover 5 and the output plate 9. When the second mating member 3 rotates about the axis of rotation C1 relative to the first mating member 2, the output plate 9 rotates relative to the cover 5. In order to rotate the output plate 9 and the second mating member 3 relative to the cover 5 in this manner, the minute gap G1 is left between the second end 5c of the cover 5 and the second mating member 3. The primary sealing portion 28 is slidable relative to the cover 5.

The following now describes what will happen when the reducer-equipped motor 4 is high-pressure washed. As shown in Fig. 4, when high-pressure water R is applied onto the reducer-equipped motor 4, the high-pressure water R hits the secondary sealing portion 29 of the sealing device 10. The high-pressure water R tries to enter inside the cover 5 through the minute gap G1 between the cover 5 and the second mating member 3 (see the arrow Y1 in Fig. 4). After passing through the minute gap G1, the high-pressure water R further tries to pass between the cover 5 and the cylindrical portion 26 of the output plate 9 to finally enter the interior of the cover 5 (see the arrow Y2 in Fig. 4). The high-pressure water R is at the pressure of, for example, approximately 10 [Mpa].

The width W1 between the inner peripheral surface 5b of the cover 5 and the outer peripheral surface 26a of the cylindrical portion 26 is greater than the width W2 between the second mating member 3 and the second end 5c of the cover 5. In other words, the width of the passage for the high-pressure water R between the cover 5 and the cylindrical portion 26 is greater than the width of the passage for the high-pressure water R between the second mating member 3 and the cover 5. This can prevent a rise in the water pressure of the high-pressure water R after it passes between the second mating member 3 and the second end 5c of the cover 5. In other words, the momentum of the high-pressure water R is attenuated as it passes between the cover 5 and the cylindrical portion 26. Thus, the high pressure of the high-pressure water R can be lowered before the high-pressure water R reaches the primary sealing portion 28. Stated differently, the secondary sealing portion 29 serves to mitigate the momentum of the high-pressure water R directed toward the primary sealing portion 28.

In the secondary sealing portion 29, the recess 33 is formed in the outer peripheral surface 26a of the cylindrical portion 26 along the entire circumference. The recess 33 can contribute to a greater width between the inner peripheral surface 5b of the cover 5 and the outer peripheral surface 26a of the cylindrical portion 26. Therefore, due to the presence of the recess 33, the momentum of the high-pressure water R directed toward the primary sealing portion 28 can be more reliably attenuated. The high-pressure water R, which has reached the space between the cover 5 and the cylindrical portion 26, is stored in the recess 33. Due to the gravity, the water stored in the recess 33 flows downward through the recess 33 to be discharged.

According to the above-described first embodiment, the sealing device 10 has the primary and secondary sealing portions 28 and 29. The primary sealing portion 28 provides sealing between the cover 5 and the cylindrical portion 26, and the secondary sealing portion 29 is closer to the opening 5d of the cover 5 than is the primary sealing portion 28. The secondary sealing portion 29 can attenuate the momentum of water and dust flowing toward the primary sealing portion 28. As a result, the primary sealing portion 28 can achieve satisfactory sealing in various environments. The secondary sealing portion 29 is defined by the cover 5 and the cylindrical portion 26 of the output plate 9. Unlike the primary sealing portion 28, separate parts are not required to provide for the secondary sealing portion 29. This makes it easy to manage the parts of the sealing device 10.

The portion of the second mating member 3 that faces in the axial direction the second end 5c of the cover 5 serves as the secondary sealing portion 29. In other words, the width W1 between the inner peripheral surface 5b of the cover 5 and the outer peripheral surface 26a of the cylindrical portion 26 is greater than the width W2 between the second mating member 3 and the second end 5c of the cover 5. This feature is advantageous when the high-pressure water R passes between the second mating member 3 and the second end 5c of the cover 5 and hits the secondary sealing portion 29 of the sealing device 10 (the gap between the cover 5 and the cylindrical portion 26). The high-pressure water R is prevented from experiencing a rise in water pressure. In other words, the momentum of the high-pressure water R is attenuated as it passes between the cover 5 and the cylindrical portion 26. Thus, the high pressure of the high-pressure water R can be lowered before the high-pressure water R reaches the primary sealing portion 28. As a result, the primary sealing portion 28 can achieve satisfactory sealing more reliably.

In the secondary sealing portion 29, the recess 33 is formed in the outer peripheral surface 26a of the cylindrical portion 26 along the entire circumference. Therefore, due to the presence of the recess 33, the momentum of the high-pressure water R directed toward the primary sealing portion 28 can be more reliably attenuated. In addition, the high-pressure water R, which has entered the space between the cover 5 and the cylindrical portion 26, can be retained in the recess 33. In other words, the recess 33 can serve as a reservoir for water that has entered the space between the cover 5 and the cylindrical section 26. As a result, the primary sealing portion 28 can achieve even more satisfactory sealing. Due to the gravity, the water in the recess 33 flows downward through the bottom of the recess 33 to be discharged through the lower part. Therefore, the recess 33 can contribute to more reliably divert the water away from flowing toward the primary sealing portion 28.

The cover 5 is made of, for example, stainless steel. As being made of stainless steel, the cover 5 can be more rustproof. Thus, the reducer-equipped motor 4 can be used in a variety of environments. The industrial robot 1 can be thus used in a variety of environments.

<Modification Example of First Embodiment>

<Sealing Device>

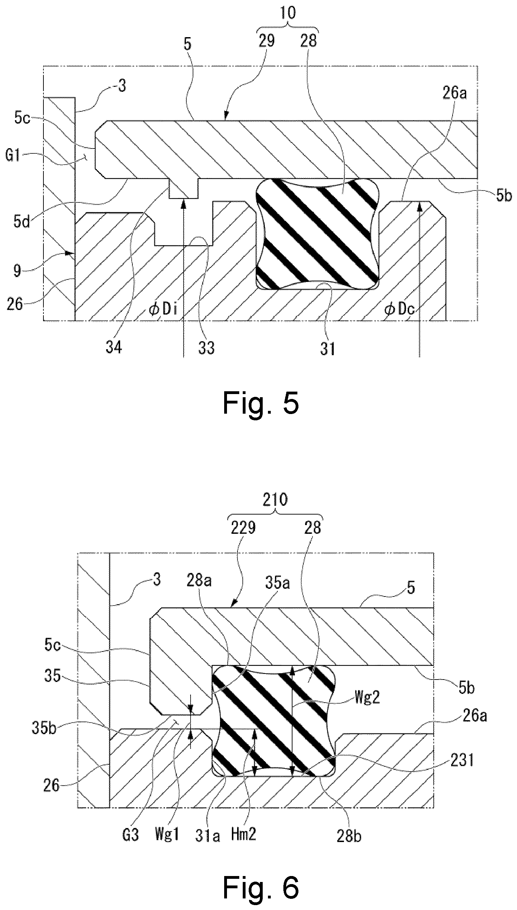

The following now describes a modification example of the first embodiment with reference to Fig. 5. Fig. 5 is a schematic diagram showing a modification example of the sealing device 10 relating to the first embodiment. Fig. 5 corresponds to Fig. 3 referred to in the above.

According to the above-described first embodiment, the recess 33 is formed in the outer peripheral surface 26a of the cylindrical portion 26 along the entire circumference in the secondary sealing portion 29. The first embodiment, however, is not limited to such. As shown in Fig. 5, a flange (an example of a protrusion set forth in the claims) 34 may be formed on the inner peripheral surface 5b of the cover 5 so as to protrude toward the recess 33. The inner diameter ΦDi of the flange 34 is slightly greater than the diameter ΦDc of the outer peripheral surface 26a of the cylindrical portion 26. The flange 34 can provide for a more complicated passage for the high-pressure water R in the secondary sealing portion 29. Therefore, the momentum of the high-pressure water R directed toward the primary sealing portion 28 can be more significantly attenuated. As a result, the primary sealing portion 28 can achieve even more satisfactory sealing.

In addition, the recess 33 may be formed on the inner peripheral surface 5b of the cover 5 instead of being formed on the outer peripheral surface 26a of the cylindrical portion 26. The recess 33 may be formed on the outer peripheral surface 26a of the cylindrical portion 26 and on the inner peripheral surface 5b of the cover 5. The flange may be formed on the inner peripheral surface 5b of the cover 5 and on the outer peripheral surface 26a of the cylindrical portion 26. The recess 33 and flange 34 can be combined in any manners.

<Second Embodiment>

<Sealing Device>

A second embodiment will now be described with reference to Fig. 6. Fig. 6 schematically illustrates the configuration of a sealing device 210 according to a second embodiment of the invention. Fig. 6 corresponds to Fig. 3 referred to in the above. Some of the features of the second embodiment are the same as the corresponding features of the first embodiment described above. In the following description of the second embodiment, those features are assigned with the same reference numerals as in the first embodiment and not described.

As shown in Fig. 6, the second embodiment is different from the first embodiment in terms of the following. The sealing device 210 of the second embodiment is different from the sealing device 10 of the first embodiment. The sealing device 210 relating to the second embodiment is the same as the sealing deice 10 relating to the above-described first embodiment in terms of the following. Specifically, the sealing device 210 relating to the second embodiment includes primary and secondary sealing portions 28 and 229. The primary sealing portion 28 is provided on the cylindrical portion 26 near the motor flange 7, and provides sealing between the cover 5 and the cylindrical portion 26. The secondary sealing portion 229 is closer to the opening 5d of the cover 5 than is the primary sealing portion 28. The secondary sealing portion 229 is configured in the same manner as in the first embodiment in that it is defined by the cover 5 and the cylindrical portion 26 of the output plate 9.

In the sealing device 210 relating to the second embodiment, the second mating member 3 does not serve as the secondary sealing portion 229. In the second embodiment, the depth Hm2 of a sealing groove 231, where the primary sealing portion 28 is placed, is less than the depth Hm1 of the sealing groove 31 in the first embodiment. Therefore, in the second embodiment, the outer peripheral surface 26a of the cylindrical portion 26 is aligned with the center of the primary sealing portion 28 in the radial direction.

The second end 5c of the cover 5 is positioned further away from the second mating member 3 than in the first embodiment. A flange 35 (an example of a protrusion set forth in the claims) is integrally formed with the second end 5c of the cover 5 and protrudes inward in the radial direction. An end surface 35a of the flange 35 facing away from the second mating member 3 is flush with an inner surface 31a of the seal groove 31 closer to the second mating member 3.

With such arrangement, the primary sealing portion 28 is adjacent to the inner peripheral surface 35b (an example of side surfaces set forth in the claims) of the flange 35 of the secondary sealing portion 229 and to the outer peripheral surface 26a (an example of the side surfaces set forth in the claims) of the cylindrical portion 26 in the secondary sealing portion 229 that faces the inner peripheral surface 35b in the radial direction. In other words, the minute gap (an example of a gap set forth in the claims) G3 defined by the inner peripheral surface 35b of the flange 35 of the secondary sealing portion 229 and the outer peripheral surface 26a of the cylindrical portion 26 leads to the primary sealing portion 28 and overlap the primary sealing portion 28 when seen in the axial direction. In other words, as being adjacent to the primary sealing portion 28, the inner peripheral surface 35b of the flange 35 and the outer peripheral surface 26a of the cylindrical portion 26 in the secondary sealing portion 229 are continuous with the primary sealing portion 28. A minute gap G3 defined between the inner peripheral surfaces 35b and the outer peripheral surface 26a is in direct communication with the primary sealing portion 28.

The inner peripheral surface 35b of the flange 35 and the outer peripheral surface 26a of the cylindrical portion 26 are aligned with the middle between the inner and outer circumferences of the primary sealing portion 28. In other words, the minute gap G3 is aligned with the middle between the inner and outer circumferences of the primary sealing portion 28. Here, the following equation is preferably satisfied.

$$1/3 \times Wg2 \leq Wg1 \leq 1/2 \times Wg2 \cdots (1)$$

Here, Wg1 denotes the width between the inner peripheral surface 35b of the flange 35 and the outer peripheral surface 26a of the cylindrical portion 26 (the width of the minute gap G3), and Wg2 denotes the width between the inner peripheral surface 5b of the cover 5 and the outer peripheral surface 26a of the cylindrical portion 26 at the site where the primary sealing portion 28 is provided, in other words, the width between the inner peripheral surface 5b of the cover 5 and the bottom surface of the sealing groove 231.

With the above-described configurations, the minute gap G3 serves as a passage for the high-pressure water R, etc. Since this passage is aligned with the middle between the inner and outer circumferences of the primary sealing portion 28, the high-pressure water R is not directly poured onto the radially outer and inner ends 28a and 28b of the primary sealing portion 28. The radially outer end 28a of the primary sealing portion 28 is in contact with the inner peripheral surface 5b of the cover 5. The radially inner end 28b of the primary sealing portion 28 is in contact with the sealing groove 231. If the high-pressure water R or the like is directly poured to such contacting sites, the water or the like may easily enter inside beyond the primary sealing portion 28.

In the above-described manner, the secondary sealing portion 229 relating to the second embodiment can effectively prevent the high-pressure water R from directly hitting the radially outer and inner ends 28a and 28b of the primary sealing portion 28. As a result, the primary sealing portion 28 can achieve even more satisfactory sealing.

If the widths Wg1 and Wg2 satisfy the expression (1) mentioned above, the width Wg1 can not be too narrow, where the width Wg1 represents the width between the inner peripheral surface 35b of the flange 35 and the outer peripheral surface 26a of the cylindrical portion 26 and the width Wg2 represents the width between the inner peripheral surface 5b of the cover 5 and the bottom of the sealing groove 231 at the site where the primary sealing portion 28 is provided. If the width Wg1 is too narrow, this may raise the water pressure of the high-pressure water R passing through the minute gap G3. Since the water pressure of the high-pressure water R is prevented from rising, the momentum of the high-pressure water R directed toward the primary sealing portion 28 can be attenuated. As a result, the primary sealing portion 28 can achieve satisfactory sealing.

In the secondary sealing portion 229 relating to the above-described second embodiment, the inner peripheral surface 35b of the flange 35 and the outer peripheral surface 26a of the cylindrical portion 26 are aligned with the middle between the inner and outer circumferences of the primary sealing portion 28. The second embodiment, however, is not limited to such. In the secondary sealing portion 229, the inner peripheral surface 35b of the flange 35 and the outer peripheral surface 26a of the cylindrical portion 26 can be positioned anywhere except for being aligned with the radially outer and inner ends 28a and 28b of the primary sealing portion 28 when seen in the axial direction. In this way, the same advantageous effects can be produced as in the above-described second embodiment.

In the above-described second embodiment, the widths Wg1 and Wg2 do not need to satisfy the expression (1), where the width Wg1 represents the width between the inner peripheral surface 35b of the flange 35 and the outer peripheral surface 26a of the cylindrical portion 26 and the width Wg2 represents the width between the inner peripheral surface 5b of the cover 5 and the bottom of the sealing groove 231 at the site where the primary sealing portion 28 is provided. The flange 35 may protrude only slightly from the cover 5. In this way, the high-pressure water R can be still prevented from directly hitting the radially outer and inner ends 28a and 28b of the primary sealing portion 28. As a result, the primary sealing portion 28 can achieve even more satisfactory sealing.

The embodiments described herein are not intended to necessarily limit the present invention to any specific embodiments. Various modifications can be made to these embodiments without departing from the true scope and spirit of the present invention. For example, in the above-described embodiments, the industrial robot 1 is a machine tool such as a machining center. The present invention, however, is not limited to such, and the industrial robot can be any of various driving devices and robots including electric wheelchairs, traveling devices, collaborative robots.

In the above-described embodiments, the reducer-equipped motor 4 is applied to the industrial robot 1. The present invention, however, is not limited to such, and the reducer-equipped motor 4 can be used in various devices other than the industrial robot 1. According to the above-described embodiments, the sealing groove 31, 231 is formed in the outer peripheral surface 26a of the cylindrical portion 26. The present invention, however, is not limited to such, and the sealing groove 31, 231 may be formed in the cover 5. In the second embodiment, the flange 35 can be formed on the outer peripheral surface 26a of the cylindrical portion 26 when the sealing groove 231 is formed in the cover 5. The flange 35 may be formed on the cover 5 and also on the cylindrical portion 26.

In the above-described embodiments, the sealing device 10 is applied to the reducer-equipped motor 4. In the embodiments described above, the cover 5 is introduced as the cylindrical first member, and the output plate 9 is introduced as the second member fitted onto the first member. The embodiments, however, are not limited to such, and the sealing device 1 can be applied in various manners for the purpose of sealing between the cylindrical first member and the second member fitted onto the first member.

According to the embodiments described above, the second mating member 3 secured onto the output plate 9 has a portion that faces in the axial direction the second end 5c of the cover 5, and this portion of the second mating member 3 serves as the lid of the secondary sealing portion 29, 229. The embodiments, however, are not limited to this, and the lid can be configured in any manner as long as it covers the opening (e.g., the opening 5d) side of the second member (e.g., the output plate 9) that is fitted onto the first member (e.g., the cover 5) and faces in the axial direction the axial end (e.g., the second end 5c) of the first member.

According to the above-described embodiments, the electric motor 8 is used as a power generating unit for generating a rotational force and inputting the rotational force into the speed reducer 6. The present invention, however, is not limited to such, and various power generating unit can be used for generating a rotational force. For example, the electric motor 8 can be replaced by a hydraulic motor, an engine or other power generating units.

In the above-described embodiments, the reducer-equipped motor 4 serving as the rotating device includes the speed reducer 6. The speed reducer 6 is fitted onto the cover 5. The present invention, however, is not limited to such. The rotating device can be any of various devices including, instead of the speed reducer 6, a rotating machine having an input part and an output part, where the input part receives a rotational force input thereto and the output part outputs the rotational force input into the input part.

According to the above-described embodiments, the speed reducer 6 is a rotating machine such as an eccentric oscillating speed reducer and a planetary gear reducer, where the eccentric oscillating speed reducer includes crankshafts and oscillating gears to be oscillatorily rotated by the crankshafts, and the planetary gear reducer includes a multi-speed planetary gear mechanism. The present invention, however, is not limited to such, and various rotating machines can be employed. For example, unlike the speed reducer 6, the rotating machine may be configured to increase the rotation generated by the electric motor 8 and outputs the resulting rotation to the output plate 9. The rotating machine may be configured to simply transmit the rotation generated by the electric motor 8 to the output plate 9 without reducing or increasing the rotation.

In the above-described embodiments, the speed reducer 6 includes the cylindrical internal gear 13, the carrier 41 disposed radially inside the internal gear 13, and the rotation input part 42 for rotating the carrier 41 at a rotation speed obtained by reducing the rotation of the rotatable shaft 8a at a predetermined ratio. According to the above description, the rotation input part 42 is an eccentric oscillating speed reducer including the crankshafts 49, and the first and second oscillating gears 50a and 50b configured to oscillatory rotate in response to the rotation of the crankshafts 49.

The number of crankshafts 49, however, is not limited to two or more. The speed reducer 6 may be acceptable as long as it includes at least one crankshaft 49 that is configured to rotate around the axis of rotation extending along the axis of rotation C1 in response to the rotation generated by the power generating unit (for example, the electric motor 8). The rotation input part 42 may be configured in any manner as long as it is an eccentric oscillation speed reducer that can reduce the rotation of the crankshafts 49 and transmit the reduced rotation to the carrier 41.

For example, the following more specifically describes an eccentric oscillating speed reducer having a single crankshaft. In this case, the speed reducer has, as the crankshaft, a so-called center crankshaft, which is coaxial with the axis of rotation C1. In response to the rotation of the center crankshaft, the first and second oscillating gears 50a and 50b are oscillatory rotated. The speed reducer 6 or other eccentric oscillating speed reducers are alternatively capable of rotating the internal gear 13 relative to the carrier 41.

According to the above-described embodiments, the internal gear 13 also serves as an outer casing of the speed reducer 6. The present invention, however, is not limited to such, and the internal gear 13 may be fitted onto the internal peripheral surface of a cylindrical case, for example. In this case, the case is defined as part of the internal gear 13.

In the embodiments described above, the fluid poured onto the sealing device 10, 210 is water. The present invention, however, is not limited to such, and the sealing devices 10 and 210 enables the primary sealing part 28 to achieve satisfactory sealing against various types of fluids. The fluid is not limited to liquids but includes gases. The fluid can be, for example, oil, gases and the like in addition to water.

According to the above-described embodiments, the input gear 21 of the industrial robot 1 includes the attachment 22 and the pinion gear 23, which are physically separated from each other. The present invention, however, is not limited to such, and the attachment 22 and the pinion gear 23 of the input gear 21 may be integrated with each other.

The foregoing embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

**LIST OF REFERENCE NUMBERS**

| | |
|---|---|
| 1 | industrial robot |
| 3 | second mating member (mating member, lid) |
| 4 | reducer-equipped motor (rotating device) |
| 5 | cover (first member) |
| 5b | inner peripheral surface |
| 5d | opening |
| 6 | speed reducer (rotating machine) |
| 8 | electric motor (power generating unit) |
| 9 | output plate (second member) |
| 10, 210 | sealing device |
| 13 | internal gear |
| 13a | outer peripheral surface |
| 25 | plate body |
| 26 | cylindrical portion |
| 26a | outer peripheral surface (side surface) |
| 28 | primary sealing portion |
| 28a | outer end |
| 28b | inner end |
| 29, 229 | secondary sealing portion |
| 33 | recess |
| 34 | flange (protrusion) |
| 35 | flange |
| 35b | inner peripheral surface (side surface) |
| 41 | carrier |
| 42 | rotation input part |
| 44 | internal teeth |
| 49 | crankshaft |
| 49a | first eccentric portion (eccentric portion) |
| 49b | second eccentric portion (eccentric portion) |
| 50a | first oscillating gear (oscillating gear) |
| 50b | second oscillating gear (oscillating gear) |
| 54a, 54b | external teeth |
| G3 | minute gap (gap) |

**Claims**

**1.** A sealing device (10, 210) comprising:

a cylindrical first member (5) having an opening (5d);
a second member (9) fitted onto an inner peripheral surface (5b) of the first member (5);
a primary sealing portion (28) providing sealing between the first and second members (5, 9); and
a secondary sealing portion (29, 229) closer to the opening (5d) than is the primary sealing portion (28),
wherein the secondary sealing portion (29, 229) is defined at least by the first and second members (5, 9).

**2.** The sealing device (10) of claim 1,

wherein the secondary sealing portion (29) includes a lid (3) provided on the second member (9) at a side close to the opening (5d),
wherein the lid (3) faces in an axial direction an axial end (5c) of the first member (5), and
wherein a width between the inner peripheral surface (5b) of the first member (5) and an outer peripheral surface (26a) of the second member (9) is greater than a width between the lid (3) and the axial end (5c) of the first member (5).

**3.** The sealing device (10) of claim 1 or 2, wherein, in the secondary sealing portion (29), a recess (33) is formed in at least one of the inner peripheral surface (5b) of the first member (5) or an outer peripheral surface (26a) of the second member (9).

**4.** The sealing device (10) of claim 1 or 2, wherein, in the secondary sealing portion (29), a protrusion (34) is formed on at least one of the inner peripheral surface (5b) of the first member (5) or an outer peripheral surface (26a) of the second member (9).

**5.** The sealing device (210) of claim 1 or 2,

wherein, in the secondary sealing portion (229), two side surfaces (35b, 26a) face each other in a radial direction with a gap therebetween, and
wherein the two side surfaces (35b, 26a) are adjacent to the primary sealing portion (28) and, when seen in an axial direction, positioned not to overlap radially outer and inner ends (28a, 28b) of the primary sealing portion (28).

**6.** The sealing device (210) of claim 5, wherein, when Wg1 represents a width between the two side surfaces (35b, 26a), and Wg2 represents a width between the inner peripheral surface (5b) of the first member (5) and an outer peripheral surface (26a) of the second member (9) at a site where the primary sealing portion (28) is provided, the widths Wg1 and Wg2 satisfy a relation represented as $1/3 \times Wg2 \leq Wg1 \leq 1/2 \times Wg2$.

**7.** The sealing device (10, 210) of claim 1, wherein, when Wg1 represents a width between the inner peripheral surface (5b) of the first member (5) and (ii) an outer peripheral surface (26a) of the second member (9) in the secondary sealing portion (29, 229), and Wg2 represents a width between the inner peripheral surface (5b) of the first member (5) and the outer peripheral surface (26a) of the second member (9) at a site where the primary sealing portion (28) is provided, the widths Wg1 and Wg2 satisfy a relation represented as $1/3 \times Wg2 \leq Wg1 \leq 1/2 \times Wg2$.

**8.** The sealing device (10, 210) of claim 1, wherein the first member (5) is made of stainless steel.

**9.** A sealing device (10) comprising:

a cylindrical first member (5) having an opening (5d), the first member (5) being made of stainless steel;
a second member (9) fitted onto an inner peripheral surface (5b) of the first member (5);
a primary sealing portion (28) providing sealing between the first and second members (5, 9); and
a secondary sealing portion (29) closer to the opening (5d) than is the primary sealing portion(28),
wherein the secondary sealing portion (29) is defined at least by the first and second members (5, 9), and, in the secondary sealing portion (29), a lid (3) is provided on the second member (9) at a side close to the opening (5d),
wherein the lid (3) faces in an axial direction an axial end (5c) of the first member (5) such that the lid (3) covers the opening (5d), and
wherein a width between the lid (3) and the axial end (5c) of the first member (5) is less than a width between the inner peripheral surface (5b) of the first member (5) and an outer peripheral surface (26a) of the second member (9).

**10.** A sealing device (210) comprising:

a cylindrical first member (5) having an opening (5d), the first member (5) being made of stainless steel;
a second member (9) fitted onto an inner peripheral surface (5b) of the first member (5);
a primary sealing portion (28) providing sealing between the first and second members (5, 9); and
a secondary sealing portion (229) closer to the opening (5d) than is the primary sealing portion (28);
wherein the secondary sealing portion (229) is defined at least by the first and second members (5, 9), and, in the secondary sealing portion (229), side surfaces (35b, 26a) face each other in a radial direction with a gap therebetween, and
wherein the side surfaces (35b, 26a) are adjacent to the primary sealing portion (28) and, when seen in an axial direction, positioned not to overlap radially outer and inner ends (28a, 28b) of the primary sealing portion (28).

**11.** A rotating device (4) comprising:

a cylindrical cover (5) having an opening (5d);
a speed reducer (6) fitted onto an inner peripheral surface (5b) of the cover (5);
an output plate (9) attached to the speed reducer (6), the output plate (9) being fitted onto the inner peripheral surface (5b) of the cover (5); and
a sealing device (10, 210) providing sealing between the cover (5) and the output plate (9),
wherein the speed reducer (6) includes:

an internal gear (13) fitted onto the inner peripheral surface (5b) of the cover (5), the internal gear (13) having internal teeth (44);
an oscillating gear (50a, 50b) having external teeth (54a, 54b) meshing with the internal teeth (44), the oscillating gear (50a, 50b) being configured to oscillatorily rotate;
a crankshaft (49) configured to receive a rotational force generated by and input from a power generating unit (8); and
a carrier (41) to which the output plate (9) is attached,

wherein the crankshaft (49) has an eccentric portion (49a, 49b) rotatably supporting the oscillating gear (50a, 50b), and the crankshaft (49) is configured to transmit the rotational force generated by the power generating unit (8) to the oscillating gear (50a, 50b),
wherein a rotational force generated by the oscillating gear (50a, 50b) is transmitted to the carrier (41), and the carrier (41) is configured to output the rotational force generated by the oscillating gear (50a, 50b) to the output plate (9),
wherein the sealing device (10, 210) includes:

a primary sealing portion (28) providing sealing between the cover (5) and the output plate (9); and
a secondary sealing portion (29, 229) closer to the opening (5d) than is the primary sealing portion (28), the secondary sealing portion (29, 229) being defined at least by the cover (5) and the output plate (9).

**12.** An industrial robot (1) comprising:

a cylindrical cover (5) having an opening (5d);
a speed reducer (6) fitted onto an inner peripheral surface (5b) of the cover (5);
an output plate (9) attached to the speed reducer (6), the output plate (9) being fitted onto the inner peripheral surface (5b) of the cover (5); and
a mating member (3) attached to the output plate (9) so as to face away from the speed reducer (6) in an axial direction;
a sealing device (10, 210) providing sealing between the cover (5) and the output plate (9); and
a power generating unit (8) for generating a rotational force,
wherein the speed reducer (6) includes:

> an internal gear (13) fitted onto the inner peripheral surface (5b) of the cover (5), the internal gear (13) having internal teeth (44);
> an oscillating gear (50a, 50b) having external teeth (54a, 54b) meshing with the internal teeth (44), the oscillating gear (50a, 50b) being configured to oscillatorily rotate;
> a crankshaft (49) configured to receive the rotational force generated by and input from the power generating unit (8); and
> a carrier (41) to which the output plate (9) is attached,

wherein the crankshaft (49) has an eccentric portion (49a, 49b) rotatably supporting the oscillating gear (50a,50b), and the crankshaft (49) is configured to transmit the rotational force generated by the power generating unit (8) to the oscillating gear (50a,50b),
wherein a rotational force generated by the oscillating gear (50a,50b) is transmitted to the carrier (41), and the carrier (41) is configured to output the rotational force generated by the oscillating gear (50a,50b) to the output plate (9),
wherein the sealing device (10, 210) includes:

> a primary sealing portion (28) providing sealing between the cover (5) and the output plate (9); and
> a secondary sealing portion (29, 229) closer to the opening (5d) than is the primary sealing portion (28);

wherein the secondary sealing portion (29, 229) is defined at least by the cover (5) and the output plate (9).

1
2
3
4
5
5a
5b
5c
5d
6
6a
6b
7
8
8a
9
10
11a
11b (11)
12a
12b
(12)
12c
13a
(13)
14
14a
14b
14c
14d
14e
15
15a
15c
(15b)
15d
16a
16b
17a
17b
18
19
19a
19b
19c
19d
19e
20
21
22
22a
22b
22c
22d
23
24
25
25a
25b
26
27
28
29
30
31
32
33
C1
III

Fig. 1

1
2
C1
48
49
C2
49
C2
46a
48
42
46
51
46a
50b
6
50a
47a
47
52
14
3
51
45b
53b
44
43a (43)
54b
53a
54a
52
13a (13)
45a
47a
41
53a
53b
49a
49b

Fig. 2

10
29
28
5
3
26a
5c
G1
W2
G2
W1
5b
5d
Hm1
9
ϕD
31
26
33
Wm

Fig. 3

10
29
28
3
5
26a
R
Y1
G1
5b
5c
5d
9
31
26
Y2
33

Fig. 4

10
5
29
28
3
26a
5c
G1
5b
5d
9
26
φDi
φDc
34
33
31

Fig. 5

210
229
28
3
28a
35a
5
5c
35
5b
Wg2
35b
26a
231
26
G3
Wg1
31a
Hm2
28b

Fig. 6

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- JP 2011240772 A